# EUROPÄISCHE PATENTANMELDUNG

(11) **EP 4 261 645 A1**
(43) Veröffentlichungstag der Anmeldung: **18.10.2023**
(21) Anmeldenummer: 22167809.7
(22) Anmeldetag: 12.04.2022
(51) Int. Cl.: G05D 1/02

(54) **LANDFAHRZEUG MIT ACHSLENKUNG**

(71) Anmelder: Dürrstein, Ingeborg, 97486 Königsberg (DE)
(72) Erfinder: Die Erfindernennung liegt noch nicht vor
(74) Vertreter: Götz, Georg Alois

(57) **Zusammenfassung**

Die Erfindung richtet sich auf ein Landfahrzeug, insbesondere landwirtschaftliches Nutzfahrzeug wie z.B. Traktor bzw. Schlepper oder lenkbares Anbau-Fahrzeug, das aufweist:
- eine Lenkachse, an der ein oder mehrere, zur Lenkung verschwenkbare Räder angebracht sind,
- einen mit dem oder den Rädern gekoppelten Linearantrieb, der über ein Stellglied zur Verschwenkung und Lenkung des oder der Räder betätigbar ist,
- eine Lenksteuerung, die mit dem Stellglied und einer Positionssensorik verbunden ist,
wobei über die Positionssensorik der Lenksteuerung Istpositionsdaten bezüglich des Landfahrzeugs übermittelt oder übermittelbar sind, um in der Lenksteuerung vorgegebene oder vorgebbare Sollpositionsdaten für das Landfahrzeug mit den Istpositionsdaten zu vergleichen und eine etwaige Soll-Ist-Differenz durch eine entsprechende Änderung der Fahrzeug-Fahrtrichtung auszugleichen,
wobei
- die Istpositionsdaten aus der Positionssensorik auf die Lenkachse des Landfahrzeugs bezogen oder beziehbar sind, und
- die entsprechende Änderung der Fahrzeug-Fahrtrichtung erfolgt, indem der Linearantrieb über das Stellglied durch die Lenksteuerung abhängig von einer Abweichung der Lenkachsen-Istpositionsdaten von den Landfahrzeug-Sollpositionsdaten betätigt oder betätigbar ist,
- und diese Betätigung der Soll-Ist-Differenz zwischen den Sollpositionsdaten für das Landfahrzeug und den auf dessen Lenkachse bezogenen Istpositionsdaten entspricht und in eine Verschwenkung des oder der Räder seiner Lenkachse zur Einhaltung der Sollpositionsdaten umsetzbar oder umgesetzt ist.

## Beschreibung

Die Erfindung betrifft ein Verfahren zum Lenken eines Landfahrzeugs, insbesondere eines landwirtschaftlichen Nutzfahrzeugs wie z.B. Traktor bzw. Schlepper oder lenkbares Anbau-Fahrzeug gemäß Oberbegriff des Anspruchs 1.

Die Erfindung betrifft ferner ein Landfahrzeug der genannten Art gemäß Oberbegriff des Anspruchs 2.

Dieses Landfahrzeug ist insbesondere zur Durchführung des vorgenannten Verfahrens ausgebildet.

Heutzutage werden Traktoren vielfach über Satellitennavigation oder andere Sensorik wie z.B. Kameras, Ultraschall etc. automatisch gesteuert bzw. gelenkt. Dazu bedarf es eines Positionssensors wie z.B. GNSS-Empfänger (GNSS: Globales Navigationssatellitensystem) oder einer Kamera oder eines mechanischen Tasters oder eines Ultraschallfühlers. Ferner sind notwendig ein Lenkungsrechner (Navcontroller), ein elektrisches oder hydraulisches Lenksystem mit Stellglied (beispielsweise hydraulisches Lenkventil) und ein Terminal zur Einstellung und zum Set-up der Lenkung. Für ein so genanntes Autosteer ist eine programmierte Kinematik zur Lenkung des Traktors oder einer Landmaschine von Bedeutung.

Es ist bekannt, eine sensorgesteuerte Lenkung auf die Spurführung der Hinterachse eines Traktors zu programmieren. Dabei ist es in der Regel wichtig, dass die Hinterachse möglichst genau auf einer im System hinterlegten bzw. vorgegebenen, so genannten A-B-Spur geführt wird. Wegen auftretenden Abweichungen ist es notwendig, durch Steuereingriffe die Lenkung eines Traktors ständig je nach Untergrundunebenheit mehr oder weniger etwas nach links oder nach rechts zu korrigieren, damit die Hinterachse möglichst genau der A-B-Spur folgt. Das heißt, mittels der Lenkachse eines Traktors oder Anbaugerätes lässt sich nicht genau auf die vorgegebene A-B-Spur einhalten.

Im Stand der Technik, nämlich in der WO2017/016670 A1 ist ein landwirtschaftliches Zugsystem mit Positionsbestimmungssystems zum Steuern von Anbaugeräten beschrieben. An ein Dreipunktgestänge eines landwirtschaftlichen Fahrzeugs ist ein Anbaugerät, beispielsweise eine Sämaschine, direkt angebracht, worauf eine Antenne angeordnet und mit einer Positionsbestimmungsvorrichtung signaltechnisch gekoppelt ist. Letztere ist mit einer Regelvorrichtung im Rahmen einer Rechnereinheit wie z.B. Bordcomputer oder Laptop oder Programm oder App eines Tablets integriert. Mit einem Unterlenker des Dreipunktgestänges ist ein als Schwenkvorrichtung dienender, hydraulischer Stellzylinder gekoppelt. Anhand der Information über die Position des Anbaugerätes wird die Schwenkvorrichtung derart geregelt verstellt, dass die Differenz zwischen der bestimmten Position des Anbaugeräts und einer Sollposition des Anbaugeräts verringert wird. Dazu wird der Unterlenker entsprechend der geregelten Verlängerung/Verkürzung des Stellzylinders verschwenkt.

Das in der WO2017/016670 beschriebene Zugsystem bringt allerdings auch Nachteile mit sich. Wenn an den Unterlenkern der Hydraulikzylinder das Dreipunkt-Gestänge und damit auch das Anbaugerät zur Seite schiebt, ist eine korrekte Führung nicht mehr gewährleistet. Bei Arbeitsbreiten ab 3 m ist eine zuverlässige Funktionsweise nicht mehr gegeben.

Es ist die Aufgabe der vorliegenden Erfindung, die Nachteile aus dem Stand der Technik zu eliminieren bzw. diesen zu verbessern, insbesondere die Lenkgenauigkeit für die landwirtschaftliche Bodenbearbeitung zu erhöhen. Die Aufgabe wird gelöst mit dem im Anspruch 1 angegebenen Landfahrzeug-Lenkungsverfahren und dem im Anspruch 2 angegebenen Landfahrzeug. Optionale, vorteilhafte Ausführungsformen der Erfindung sind in den abhängigen Unteransprüchen beschrieben.

Anders als beim vorbekannten Stand der Technik wird bei einem Landfahrzeug mit erfindungsgemäßer Achslenkung die gelenkte Achse/Lenkachse, vorzugsweise eine gelenkte Vorderachse eines Zweiachs-Landfahrzeugs mittels einer Positionssensorik genau über eine vorgegebene, beispielsweise schon vorab ermittelte Leitspur (A-B-Spur) geführt. Der Fahrzeugteil oder Zugsystemteil hinter der Lenkachse wird dann spurgenau sozusagen "hinterhergeschleppt".

Erfindungswesentlich ist, dass die Lenkachse des erfindungsgemäßen Landfahrzeugs, insbesondere die Lenkachse in dessen Front oder im Vorderteil, möglichst genau über einer digitalen Leitlinie/A-B-Spur, welche die Sollpositionsdaten darstellen, geführt wird.

Mit der Erfindung erzielbare Vorteile bestehen z.B. in folgendem: Die Position einer Hinterachse oder starren Achse des Landfahrzeugs braucht nicht in die (z.B. computergestützte bzw. softwarebasierte) Führung oder Navigation des Landfahrzeugs einbezogen zu werden. Aufgrund der Orientierung der Navigation direkt an der Achslenkung entfällt bei angebrachten Anbaugeräten die Notwendigkeit eines kostspieligen Schieberahmens.

Vorteilhafte Ausführungsformen sind in den (abhängigen) Unteransprüchen angegeben und werden nachfolgend zumindest teilweise näher erläutert.

Nach einer optionalen, einfach zu realisierenden Ausführung der Erfindung ist die Positionssensorik an, über oder im Bereich der Lenkachse des Landfahrzeugs, insbesondere mittig über und/oder deckungsgleich mit der Lenkachse angeordnet. Jedoch ist die Erfindung bei ihrer Realisierung nicht auf die Realisierung einer konstruktiv-geometrisch bestimmten Anbauposition über der Lenkachse des Landfahrzeugs festgelegt bzw. nicht beschränkt. Vielmehr kann alternativ oder zusätzlich der Ort einer Positionssensorik oder Positionsantenne virtuell, d.h. softwaremäßig bzw. programmtechnisch simuliert werden, braucht also im Sinne der Erfindung nur virtuell an, über oder in den Bereich der Lenkachse des Landfahrzeugs gelegt oder versetzt werden. Die entsprechende Software benötigt dazu lediglich an sich bekannte, geometrische Parameter, Abmessungen, Abstände, Dimensionen oder sonstige geometrische Verhältnisse des Landfahrzeugs und/oder Anbaufahrzeugs, um den Ort der Anbringung der Positionssensorik entsprechend den realen Umständen virtuell bzw. per Software zu definieren.

In der Praxis der landwirtschaftlichen Bodenbearbeitung treten vielfach folgende Probleme auf: Durch eine Anbaugerätedrift an einem Hang befinden sich Reihenfrüchte je nach Hanglage neben der vorgegebenen A-B-Spur eines Zugschleppers. Das gleiche gilt für Fahrgassen bei Pflegearbeiten wie Düngen und chemischer und mechanischen Pflanzenschutz. Zur Abhilfe wird auf eine Drill- oder Pflanz-Maschine eine GNSS-Antenne mittig montiert. Mit einem Datenlogger wird die Spur der Drill- und/oder Pflanzmaschine unabhängig von der Position des Schleppers und der Anbaugerätedrift aufgezeichnet.

Für Folgearbeiten wird diese Anbaugerätespur über ein Terminal oder eine sonstige Eingabeschnittstelle in einen der Lenksteuerung dienenden Computer/Rechner übertragen. Die Eingabeschnittstelle, die Lenksteuerung und ein Hydraulikventil werden an einer hydraulischen Lenkachse eines Schleppers oder Anbaugerätes oder an eine hydraulische Gerätesteuerung wie z.B. Schieberahmen angeschlossen. Eine GNSS-Antenne wird genau in der Mitte über der Lenkachse des Schleppers oder Anbaugeräts montiert.

Durch dieses erfindungsgemäße Lenksystem lassen sich Schlepper oder Anbaugerät genau über die Leitspur, welche vorab durch das Anbaugerät mit GNSS-Antenne aufgezeichnet wurde, unabhängig von der Steuerung des Schleppers führen.

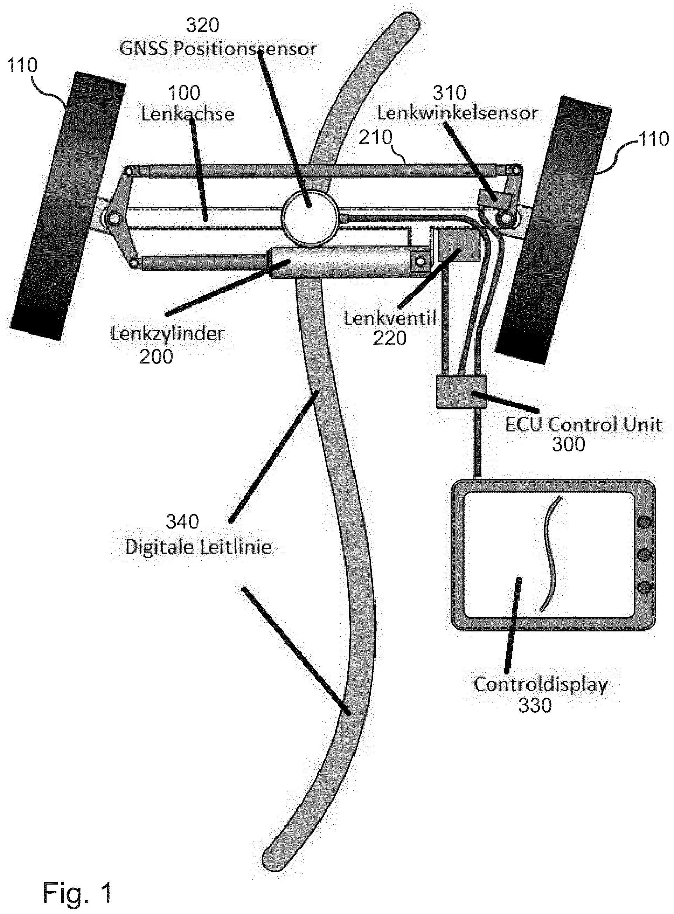

Weitere Einzelheiten, Merkmale, Merkmals(unter)kombinationen, Vorteile und Wirkungen auf Basis der Erfindung ergeben sich aus der nachfolgenden Beschreibung einer beispielhaften Ausführungsform der Erfindung und einer Zeichnung. Diese zeigt in einer einzigen
- Fig 1: in schematischer Draufsicht eine grundsätzliche Anordnung des erfindungsgemäßen Lenksystems.

Gemäß Figur umfasst das Lenksystem des erfindungsgemäßen (nicht gezeichneten) Landfahrzeugs eine Lenkachse 100 mit zwei Rädern 110, die im Bereich der Enden der Lenkachse 100 verschwenkbar angelenkt sind. Zur Verschwenkung der Räder 110 dient ein als Linearantrieb arbeitender, teleskopartiger Lenkzylinder 200, welcher in einem mit den Rädern 110 gekoppelten Lenkgestänge integriert ist und bei teleskopartigem Ein- und Ausfahren das Lenkgestänge 210 zur Verschwenkung und Lenkung der Räder 110 verstellen kann. Als Stellglied für den Lenkzylinder 200 dient ein mit Letzterem gekoppeltes Lenkventil 220, das am Ausgang einer Lenksteuerung 300 angekoppelt ist und von dieser gesteuert wird. Eingangsseitig ist die Lenksteuerung 300 mit einem Lenkwinkelsensor 310 und einem GNSS-Positionssensor 320 verbunden. Als Mensch-Maschine-Interface zur Lenksteuerung 300 dient ein Steuerungsdisplay 330, welches bidirektional zur Eingabe von Set-up- und sonstigen Steuerungsbefehlen und zur Ausgabe von Systeminformationen, insbesondere einer digitalen Leitlinie 340 als A-B-Spur, ausgebildet ist.

Gemäß gezeichnetem Ausführungsbeispiel ist konstruktionstechnisch der GNSS-Positionssensor 320 mittig über und/oder deckungsgleich mit der Lenkachse 100 angeordnet. Wie bereits weiter oben angesprochen, kann alternativ oder zusätzlich zur konstruktionstechnischen Anordnung die Lenksteuerung 300 mittels spezifischer Programmierung auf der Basis geometrischer Landfahrzeug-Parameter dazu ausgebildet sein, eine Position des GNSS-Positionssensors 320 relativ zur Landfahrzeug-Geometrie virtuell bzw. softwaremäßig zu definieren und/oder zu simulieren. Sowohl durch die genannte, konstruktionstechnische bzw. mechanische Anordnung des GNSS-Positionssensors 320 als auch die virtuelle Simulation von dessen Anbringungsort auf dem Landfahrzeug bzw. auf dessen Lenkachse 100 per Software in der Lenksteuerung 300 lassen sich die Istpositionsdaten aus dem Positionssensor 320 auf die Fahrzeug-Lenkachse 100, insbesondere auf dessen mittigen Bereich, beziehen.

Zur Funktionsweise des Lenksystems wird folgendes ausgeführt: Über den GNSS-Positionssensor 320 werden Istpositionsdaten der Lenkachse 100 des Landfahrzeugs der Lenksteuerung 300 zugeführt. In Letzterer sind Sollpositionsdaten vorab abgespeichert, welche der digitalen Leitlinie 340 (A-B-Spur) entsprechen und gegebenenfalls bei einer vorausgegangenen Referenzfahrt auf dem zu bearbeitenden, landwirtschaftlichem Territorium aufgenommen wurden. Diese Sollpositionsdaten werden in der Lenksteuerung 300 mit den vom GNSS-Positionssensor 320 gelieferten Istpositionsdaten laufend verglichen. Auf eine etwaige Differenz zwischen Soll- und Istwert hin steuert die Lenksteuerung 300 das Lenkventil 220 entsprechend an, welches daraufhin den Lenkzylinder 200 zum Verschwenken der Räder 110 über das Lenkgestänge 210 verstellt. Die Verstellung ist derart, dass eine etwaige Soll-Ist-Differenz zwischen Sollpositionsdaten und Istpositionsdaten ausgeglichen oder minimiert wird und so die digitale Leitlinie 340 bzw. die A-B-Spur beim Führen und Lenken des Landfahrzeugs eingehalten werden kann.

### Bezugszeichenliste

- 100 -: Lenkachse
- 110 -: Rad
- 200 -: Lenkzylinder
- 210 -: Lenkgestänge
- 220 -: Lenkventil
- 300 -: Lenksteuerung
- 310 -: Lenkwinkelsensor
- 320 -: GNSS-Positionssensor
- 330 -: Steuerungsdisplay
- 340 -: digitale Leitlinie

## Patentansprüche

1. Verfahren zum Lenken eines Landfahrzeugs, insbesondere eines landwirtschaftlichen Nutzfahrzeugs wie z.B. Traktor bzw. Schlepper oder lenkbares Anbau-Fahrzeug, welches Landfahrzeug aufweist:
- eine Lenkachse (100), an der ein oder mehrere, zur Lenkung verschwenkbare Räder (110) angebracht sind,
- einen mit dem oder den Rädern (110) gekoppelten Linearantrieb (200), der über ein Stellglied (220) zur Verschwenkung und Lenkung des oder der Räder (110) betätigbar ist,
- eine Lenksteuerung (300), die mit dem Stellglied (220) und einer Positionssensorik (320) verbunden ist,
wobei über die Positionssensorik (320) der Lenksteuerung (300) Istpositionsdaten bezüglich des Landfahrzeugs übermittelt werden,
wobei in der Lenksteuerung (300) Sollpositionsdaten (340) für das Landfahrzeug vorgegeben werden,
wobei in der Lenksteuerung die Sollpositionsdaten (340) mit den Istpositionsdaten verglichen werden,
und wobei eine etwaige Soll-Ist-Differenz durch eine entsprechende Änderung der Fahrzeug-Fahrtrichtung ausgeglichen wird,
**dadurch gekennzeichnet, dass**
- die Istpositionsdaten aus der Positionssensorik (320) auf die Lenkachse (100) des Landfahrzeugs bezogen werden, und
- zur entsprechenden Änderung der Fahrzeug-Fahrtrichtung der Linearantrieb (200) über das Stellglied (220) durch die Lenksteuerung (300) entsprechend einer Abweichung der Lenkachsen-Istpositionsdaten von den Landfahrzeug-Sollpositionsdaten (340) betätigt wird,
- und diese Betätigung eine der angestrebten Veränderung der Fahrzeug-Fahrtrichtung entsprechende Verschwenkung des oder der Räder (110) seiner Lenkachse (100) bewirkt.

2. Landfahrzeug, insbesondere landwirtschaftliches Nutzfahrzeug wie z.B. Traktor bzw. Schlepper oder lenkbares Anbau-Fahrzeug und ausgebildet zu Durchführung des Verfahrens nach Anspruch 1, aufweisend:
- eine Lenkachse (100), an der ein oder mehrere, zur Lenkung verschwenkbare Räder (110) angebracht sind,
- einen mit dem oder den Rädern (110 gekoppelten Linearantrieb (200), der über ein Stellglied (220) zur Verschwenkung und Lenkung des oder der Räder (110) betätigbar ist,
- eine Lenksteuerung, die mit dem Stellglied und einer Positionssensorik verbunden ist,
wobei über die Positionssensorik (320) der Lenksteuerung (300) Istpositionsdaten bezüglich des Landfahrzeugs übermittelt oder übermittelbar sind, um in der Lenksteuerung (300) vorgegebene oder vorgebbare Sollpositionsdaten (340) für das Landfahrzeug mit den Istpositionsdaten zu vergleichen und eine etwaige Soll-Ist-Differenz durch eine entsprechende Änderung der Fahrzeug-Fahrtrichtung auszugleichen,
**dadurch gekennzeichnet, dass**
- die Istpositionsdaten aus der Positionssensorik (320) auf die Lenkachse (100) des Landfahrzeugs bezogen oder beziehbar sind, und
- die entsprechende Änderung der Fahrzeug-Fahrtrichtung erfolgt, indem der Linearantrieb (200) über das Stellglied (220) durch die Lenksteuerung (300) abhängig von einer Abweichung der Lenkachsen-Istpositionsdaten von den Landfahrzeug- Sollpositionsdaten (340) betätigt oder betätigbar ist,
- und diese Betätigung der Soll-Ist-Differenz zwischen den Sollpositionsdaten (340) für das Landfahrzeug und den auf dessen Lenkachse (100) bezogenen Istpositionsdaten entspricht und in eine Verschwenkung des oder der Räder (110) seiner Lenkachse (100) zur Einhaltung der Sollpositionsdaten (340) umsetzbar oder umgesetzt ist.

3. Landfahrzeug nach Anspruch 2,
**dadurch gekennzeichnet, dass**
der Bezug der Istpositionsdaten auf die Lenkachse (100) in der Lenksteuerung (300) realisiert ist, indem programm- bzw. softwaretechnisch der Ort der Positionssensorik (320) virtuell an, über oder in den Bereich der Lenkachse (100) des Landfahrzeugs gelegt oder jeweils dort simuliert oder simulierbar ist.

4. Landfahrzeug nach Anspruch 2,
**dadurch gekennzeichnet, dass**
die Positionssensorik (320) an, über oder im Bereich der Lenkachse (100) des Landfahrzeugs angeordnet ist.

5. Landfahrzeug nach Anspruch 4,
**dadurch gekennzeichnet, dass**
die Positionssensorik (320) mittig über und/oder deckungsgleich mit der Lenkachse (100) angeordnet ist.

6. Landfahrzeug nach einem der vorangehenden Ansprüche,
**dadurch gekennzeichnet, dass**
die Positionssensorik (320) mittels einer zum Satellitenempfang ausgebildeten Antenne, insbesondere GNSS-Antenne und/oder GNSS-Empfänger, realisiert ist.

7. Landfahrzeug nach einem der vorangehenden Ansprüche, mit wenigstens einer Vorder- und Hinterachse, wobei die Vorderachse oder die in Fahrtrichtung erste Achse die Lenkachse (100) ist,
**dadurch gekennzeichnet, dass**
die Istpositionsdaten aus der Positionssensorik auf die Vorderachse oder erste Achse des Landfahrzeugs bezogen oder beziehbar sind.

8. Landfahrzeug nach einem der vorangehenden Ansprüche,
**dadurch gekennzeichnet, dass**
der Linearantrieb als hydraulischer und/oder elektrischer, teleskopartig verstellbarer Lenkzylinder (200) realisiert ist.

9. Landfahrzeug nach einem der vorangehenden Ansprüche,
**dadurch gekennzeichnet, dass**
das Stellglied als hydraulisches oder elektrisches Lenkventil (220) realisiert ist, welches von der Lenksteuerung (300) kontrolliert oder kontrollierbar ist.

10. Landfahrzeug nach einem der vorangehenden Ansprüche,
**dadurch gekennzeichnet, dass**
die Sollpositionsdaten in der Lenksteuerung (300) als Leitlinie (340) oder A-B-Spur für die Fahrzeug-Fahrtrichtung abgespeichert oder abspeicherbar oder auf einem Terminal, Steuerungsdisplay (330) oder einem sonstigen Endgerät zur Eingabe und Anzeige von Daten dargestellt oder darstellbar sind.
